# EUROPÄISCHE PATENTSCHRIFT

(11) **EP 3 513 766 B1**
(45) Veröffentlichungstag und Bekanntmachung des Hinweises auf die Patenterteilung: **22.04.2020**
(21) Anmeldenummer: 18152472.9
(22) Anmeldetag: 19.01.2018
(51) Int. Cl.: A61C 17/22, A61C 17/20, A61C 17/34

(54) **ZAHNREINIGUNGSVORRICHTUNG**
TOOTH-CLEANING DEVICE
DISPOSITIF DE NETTOYAGE DENTAIRE

(43) Veröffentlichungstag der Anmeldung: 24.07.2019
(73) Patentinhaber: BLBR GmbH, 82031 Grünwald (DE)
(72) Erfinder: Sörgel, Norbert, 82031 Grünwald (DE); Keiner, Michael, 35619 Braunfels (DE)
(74) Vertreter: Becker & Kurig Partnerschaft Patentanwälte PartmbB

(56) Entgegenhaltungen:
- WO-A1-2009/137671
- DE-A1-102014 008 956
- DE-A1-102015 109 891
- DE-U1-202009 008 362
- GB-A- 2 537 581

## Beschreibung

### Technisches Gebiet

Die vorliegende Erfindung betrifft eine Zahnreinigungsvorrichtung und ein Anpassungsverfahren für eine Zahnreinigungsvorrichtung. Insbesondere betrifft die Erfindung eine Zahnreinigungsvorrichtung, die die gleichzeitige Reinigung mehrerer, bevorzugt aller Zähne eines Benutzers ermöglicht, und ein entsprechendes Anpassungsverfahren, wobei Federabschnitte in einem Kupplungselement zwischen einem Mundstück und einer Antriebsvorrichtung der Zahnreinigungsvorrichtung eine gleichmäßigere Schwingungsübertragung und somit ein verbessertes Reinigungsergebnis erreichen.

### Beschreibung des Standes der Technik

Das Putzen der Zähne ist die Basis der Individualprophylaxe zur Zahnerhaltung. Primäre Ziele sind die Entfernung bakterieller Plaques (Karies, Parodontitis) und die Entfernung von Speiseresten und Fremdkörpern. Sekundäre Ziele sind die Fluoridapplikation über Zahncremes zur Erhöhung der Widerstandskraft der Zähne, insbesondere des Zahnschmelzes gegen saure Stoffwechselprodukte der Bakterien im Mundraum.

Das verbreitetste und auch billigste Modell ist die mit der Hand geführte Kurzkopfzahnbürste. Einige Bereiche im Mund sind durch einen kleinen Bürstenkopf besser erreichbar, weshalb hochwertige Handzahnbürsten oft über einen kurzen Kopf, mittelharte bis weiche Kunststoffborsten mit abgerundeten Borstenenden und einen ergonomischen Handgriff verfügen, der eine sichere Führung erlaubt.

Eine weitere verbreitete Art der Zahnreinigung ist die Verwendung einer oszillierendrotierende Zahnbürste, die sich durch einen runden rotierenden bzw. oszillierenden Bürstenkopf auszeichnet. Das Funktionsprinzip ist einem Zahnpoliturwerkzeug ähnlich. Die Reinigungsleistung von oszillierend-rotierenden Bürstenköpfen ist nach einer Studie in einem geringen Maße besser als diejenige von Handzahnbürsten.

Als Weiterentwicklung der elektrischen Zahnbürste gilt die elektronische Schallzahnbürste. Bei dieser wird der Bürstenkopf mit einer höheren Frequenz als bei herkömmlichen elektrischen Zahnbürsten bewegt, meist mit einer Frequenz von 250 bis 300 Hertz.

Eine neuere Weiterentwicklung ist die Ultraschallzahnbürste, die Schwingungsfrequenzen oberhalb 300 Hertz nutzt. Ultraschallzahnbürsten erreichen bis zu 1,8 Mio. Schwingungen pro Sekunde (1,8 Mhz). Derartige Geräte arbeiten mit einem Tupfer, der Flüssigkeit im Mund in Schwingungen versetzt und mithilfe einer speziellen Zahnpasta erzeugte Schaumblasen zum Platzen bringt. Durch dieses Zerplatzen wird die Reinigungsleistung erreicht. Ultraschallzahnpasta enthält keinen Putzkörper und arbeitet somit nicht mehr mechanisch.

Allen obigen Zahnreinigungsverfahren gleich ist, dass die eigentliche Reinigungstätigkeit der Zahnflächen manuell durch den Anwender erfolgen muss. Unabhängig davon, welche Form der Zahnreinigung gewählt wird, muss der Benutzer einen nur einige Millimeter großen Bürstenkopf in verschiedenen Techniken über die jeweilige Zahnoberfläche führen. Dabei kommen verschiedenste Hinweise zum Einsatz, wie die sinnvolle Ausführung der Putzbewegung (kreisend, streichend) zu gestalten ist. Um ein normales menschliches Gebiss sorgfältig zu reinigen, werden 2,5 bis 3 Minuten ausschließliche Reinigungstätigkeit benötigt.

Der manuelle Putzvorgang durch den Anwender ist jedoch mit gravierenden Mängeln behaftet:
- Bei einer manuellen Reinigung besteht immer die Gefahr, dass einige Zähne oder Zahnflächen vergessen werden.
- Der Anwender kann zu viel oder zu wenig Druck mit dem Bürstenkopf ausüben.
- Durch unsachgemäße Techniken können Speisereste oder Zahnbeläge in den Zwischenraum zwischen Zahnfleisch und Zahn gelangen und dort Probleme verursachen.
- Zahnbürstenköpfe werden grundsätzlich ohne besonderen Hygieneschutz aufbewahrt, so dass sie ein Reservoir für Krankheitsüberträger darstellen können.
- Die manuelle Zahnreinigung nimmt mit 2,5 bis 3 Minuten zweimal täglich zu viel Zeit in Anspruch.

Um diese Nachteile abzumindern, sollte der Vorgang der Zahnreinigung so weit wie möglich automatisiert und individuell an Form und Größe der Zähne und des Kiefers des Anwenders angepasst werden. Insbesondere ist eine schnelle, anwendungssichere und gründliche Zahnreinigungstechnik wünschenswert, was in den vergangenen Jahren zur Entwicklung von Zahnreinigungssystemen für das gesamte Gebiss eines Benutzers geführt hat.

Die Patentanmeldung DE 102015109891 A1, die von den Erfindern der vorliegenden Anmeldung entwickelt wurde, offenbart eine solche Zahnputzvorrichtung für die gleichzeitige Reinigung mehrerer, vorzugsweise aller Zähne eines Benutzers. Hier wird ein Mundeinsatz über eine Kupplung mit einem Vibrationsmotor verbunden, der die Zahnputzvorrichtung in Vibration versetzt. Ist der Mundeinsatz zweitteilig, werden bevorzugt zwei Kupplungen verwendet (siehe Fig. 5A, 5B und 6 in der DE 102015109891 A1), um das jeweilige einzelne Mundstück getrennt mit zwei Vibrationsmotoren zu verbinden. Zwei einzelne Motoren führen jedoch zu erhöhtem Gewicht und größerer Störungsanfälligkeit. Auch ist wegen des höheren Gewichts ein freihändiger Betrieb des Systems nicht möglich, der jedoch essentiell für eine über mehrere Anwendungen konstante Reinigungswirkung ist, da jeder Einfluss des Benutzers potentiell Störungen, Achsverschiebungen oder Druckstellen hervorrufen kann.

In einer kurzen Passage der DE 102015109891 A1 wird auch die Möglichkeit erwähnt, dass ein einzelner Motor mit den zwei Mundstücken gekoppelt werden kann. Jedoch ließ durch eine solche Ausführung des Zahnreinigungssystems das Reinigungsergebnis stark nach, insbesondere wurde eine ungenügende Reinigungswirkung im Bereich der Frontzähne beobachtet. Es ist davon auszugehen, dass eine Achsverschiebung und ungleichmäßige Druckpunkte durch den Betrieb zweier Mundstücke mit einem einzelnen Motor erzeugt werden, was eine einwandfreie Reinigungsprozedur beeinträchtigt. Diese Ausführungsform wurde daher zu dem damaligen Zeitpunkt verworfen. Die Weiterentwicklung der vorliegenden Erfindung nimmt diesen Ansatz wieder auf.

In der DE 102015109891 A1 werden die Mundstücke außerdem individuell angepasst für jeden Benutzer hergestellt. Hier erfolgt zunächst ein Scan der Gebissstruktur, die Transformation der gescannten Daten in eine Konstruktionsdatei und die anschließende Produktion im 3D Druck, vorzugsweise mittels eines Lasersinter-Verfahrens. Diese Produktionstechnik der Mundeinsätze ist sehr aufwendig und teilweise auch fehleranfällig. Zunächst muss ein Scan des Gebisses mit einem Intraoralscanner erfolgen. Im nächsten Schritt wird ein 3D-Gebissmodell aus den Scandaten generiert, auf dessen Grundlage eine Konstruktionsdatei für die Mundeinsätze erstellt wird. Zuletzt werden die Mundeinsätze im 3D-Druckverfahren produziert. Jeder Fehler im Scan wird dabei durch den gesamten Produktionsprozess übertragen.

Die obigen Mängel im Stand der Technik sollten durch die Konstruktion eines an den Benutzer angepassten, vollautomatischen Zahnreinigungsgeräts behoben werden. Chemische, kinetische und mechanische Reinigungseigenschaften sollen sich derart ergänzen, dass ein nahezu optimales Reinigungs- und Pflegeergebnis sowohl der Zähne, als auch des Zahnfleischs erzielt wird. Das Anpassungsverfahren der vorliegenden Erfindung soll sich zudem zur preisgünstigen Herstellung großer Stückzahlen eignen. Fertigungsfehler sollen durch die automatisierte Herstellung weitestgehend eliminiert werden.

### Zusammenfassung der Erfindung

Die vorliegende Erfindung wird durch die beigefügten Ansprüche bereitgestellt. Die folgende Offenbarung dient dem Verständnis der vorliegenden Erfindung.

In einer bevorzugten Ausführungsform der Offenbarung wird eine Zahnputzvorrichtung für die gleichzeitige Reinigung mehrerer, vorzugsweise aller Zähne eines Benutzers bereitgestellt. Die Zahnputzvorrichtung umfasst mindestens einen Mundeinsatz für den Oberkiefer des Benutzers und mindestens einen Mundeinsatz für den Unterkiefer des Benutzers. Ein Mundeinsatz (für Ober- bzw. Unterkiefer) ist bevorzugt für alle Zähne des Ober- bzw. Unterkiefers angepasst. Jedoch können die Mundeinsätze auch mehrteilig ausgebildet sein, z. B. jeweils ein Abschnitt für die rechte und die linke Gebisshälfte des jeweiligen Kiefers oder jeweils ein Abschnitt für die Zahninnen-, Zahnaußen- und Kauflächenflanken. Die Ausführung mit jeweils genau einem Mundstück für den Ober- und den Unterkiefer ist jedoch bevorzugt. Die Mundeinsätze umfassen bevorzugt eine stabile Halterung (im Folgenden auch als Basiskörper bezeichnet), die zur Schwingungskupplung mit einem Antrieb dient. Dieser Basiskörper umfasst im Wesentlichen ein biokompatibles Material, das bevorzugt die EN ISO 10993-1 erfüllt und/oder zertifiziert für den Lebensmittelkontakt gemäß der EU Kunststoff-Direktive 2002/72/EC. Besonders bevorzugt ist die Verwendung von biokompatiblem Polyamid (Homo- und/oder Copolyamid), wie etwa PA6 oder PA12. In einer besonders bevorzugten Ausführungsform wird zur Fertigung der stabile Halterungen bzw. der Basiskörper der Mundeinsätze Polyamid 12 verwendet, z.B. in der Ausführung PA 2200 (weiß) oder PA 2201 (transparent). In einer Ausführungsform ist der gesamte Basiskörper einstückig aus dem oben beschriebenen biokompatiblen Material hergestellt.

Die Zahnputzvorrichtung umfasst zudem eine Antriebsvorrichtung, die beispielsweise ein Gehäuse und in dem Gehäuse einen Motor (Schallwandler), eine Batterie bzw. einen Akku (z.B. Li-Ionen-Akku), eine Steuerung bzw. Steuerplatine (z.B. Prozessor, Motorsteuerung und einen Datenspeicher mit Anweisungen für die Motorsteuerung) und eine Anzeigevorrichtung (z.B. LED-Display, einzelne farbige LED-Leuchten oder E-Ink Display) aufweist.

Die Zahnputzvorrichtung umfasst in einer bevorzugten Ausführungsform zudem einen Kupplungsabschnitt, der zwei Arme und einen Antriebsvorrichtungsverbindungsabschnitt aufweist, wobei die mindestens zwei Mundeinsätze jeweils mit einem Arm des Kupplungsabschnitts verbunden sind und der Antriebsvorrichtungsverbindungsabschnitt mit der Antriebsvorrichtung verbunden ist. Die Zahnputzvorrichtung der Offenbarung ist dadurch ausgezeichnet, dass die Arme des Kupplungsabschnitts, die mit den Mundeinsätzen verbunden sind, jeweils mindestens einen Federabschnitt aufweisen. Die Federabschnitte weisen bevorzugt eine geringere Steifigkeit, als die übrigen Bereiche der Arme bzw. der Arme ohne Federabschnitte, und eine hohe Flexibilität auf, so dass die Federabschnitte die Mundeinsätze bei Belastung in Richtung einer Grundstellung vorspannen. Die Federabschnitte ermöglichen zum einen ein leichteres Einsetzen der Mundeinsätze in den Mundraum. Zudem werden Eigenresonanzschwingungen der Mundeinsätze zueinander durch den gefederten Kupplungsabschnitt gedämpft. Es sei angemerkt, dass sich die Federabschnitte in einigen Ausführungsformen über die gesamt Länge eines Arms (siehe etwa die Figuren der Anmeldung) erstrecken können. Bevorzugt erstrecken sich die Federabschnitte über 20%-100% der Länge eines gefederten Arms und insbesondere über 35%-95% oder besonders bevorzugt 65%-90% des Arms.

Die Federabschnitte des Kupplungsabschnitts bewirken weiterhin eine verbesserte Schwingungsübertragung auf die Zähne des Benutzers. In einer herkömmlichen, steifen Verbindung wie etwa im oben beschriebenen Stand der Technik, nimmt die Amplitude der Schwingung der Mundstücke vom Kupplungspunkt mit dem Kupplungsabschnitt hin zu dem freien Ende an den Backenzähnen des Benutzers zu. Somit wird mit einer herkömmlichen Vorrichtung an den Schneidezähnen kaum gereinigt, während die hohe Amplitude an den Backenzähnen zu Schäden oder erhöhter Erosion führen kann.

Bei der Zahnputzvorrichtung einer bevorzugten Ausführungsform ist die Antriebsvorrichtung angepasst, um eine Schwingung von 100 Hz bis 500 Hz, bevorzugt 200 Hz bis 350 Hz, über den Y Kupplungsabschnitt an die Mundeinsätze zu übertragen. In diesen Frequenzbereichen wird ein gutes Reinigungsergebnis bei geringer Dauer erreicht.

Bei der Zahnputzvorrichtung einer bevorzugten Ausführungsform ist die Antriebsvorrichtung angepasst, um den Kupplungsabschnitt und die Mundeinsätze in einer Ebene zum Schwingen, bevorzugt in einer Sinuskurve, anzutreiben, die der Ebene entspricht, in der die Arme des Kupplungsabschnitts liegen. Die Bewegungen sorgen für eine dynamische Flüssigkeitsströmung. Zahnpasta oder eine ähnliche Zusammensetzung und Speichel werden sanft zu einer mit Sauerstoff angereicherten, schäumenden Flüssigkeit vermischt. Diese wird im gesamten Mundraum verteilt, auch hinter und zwischen den Zähnen sowie entlang des Zahnfleischrandes, wo sich die Plaque-Biofilm-Bakterien sammeln. Eine mit einem Vibrationsmotor im o. g. Schwingungsbereich angetriebenes Zahnreinigungsvorrichtung ist in der Lage, bis zu viermal mehr Plaque zu entfernen, als eine Handzahnbürste. Somit gewährleisten die Federabschnitte eine gleichmäßige Schwingungsübertragung auf die gesamte Länge der Mundeinsätze, von den Schneide- bis zu den Backenzähnen.

Bei der Zahnputzvorrichtung einer bevorzugten Ausführungsform ist der Kupplungsabschnitt mit den Federabschnitten einstückig ausgebildet. Bei der Zahnputzvorrichtung einer weiteren bevorzugten Ausführungsform sind die Federabschnitte einstückig mit den Mundeinsätzen und/oder den nicht gefederten Abschnitten des jeweiligen Arms ausgebildet. Die einstückige Ausbildung verbessert die Schwingungsübertragung zwischen Antriebsvorrichtung und Mundstück. Zudem werden Zwischenräume vermieden, die den Reinigungsaufwand erhöhen oder die hygienischen Bedingungen des Geräts verschlechtern könnten. In einer bevorzugten Ausführungsform besteht der Kupplungsabschnitt zur besseren Kontrolle des Eigenresonanzverhaltens aus dem identischen Material, bevorzugt biokompatiblen Polyamid (besonders bevorzugt PA 12 wie PA 2200 oder PA 2201), wie die Basisteile der Mundeinsätze.

Bei der Zahnputzvorrichtung einer anderen bevorzugten Ausführungsform sind die Federabschnitte über Steck- oder Schraubverbindungen austauschbar. Über einen solchen modularen Aufbau des Kupplungsabschnitts können Wartungen ermöglicht werden, die den Ersatz des gesamten Kupplungsabschnitts unnötig machen können.

Bei der Zahnputzvorrichtung einer bevorzugten Ausführungsform sind die Federabschnitte im Vergleich zu dem Arm des Kupplungsabschnitts, mit dem sie verbunden sind, verjüngt und geschwungen bzw. S-förmig auf und ab gebogen angeordnet. Die Verjüngung der Kupplungsabschnitte kann dabei durch Plattdrücken (z.B. unter Wärme- und Druckeinwirkung oder Walzen) der jeweiligen Arme des Kupplungsabschnitts gebildet sein und die S-Form durch anschließendes Auf- und Abbiegen der plattgedrückten Arme gebildet werden, in der Ebene, die längs durch die Arme und den Antriebsvorrichtungsverbindungsabschnitt des Kupplungsabschnitts, also in der senkrechten Symmetrieebene des Gebisses des Anwenders, verläuft.

Bei der Zahnputzvorrichtung einer anderen bevorzugten Ausführungsform sind die Federabschnitte durch mehrere Einkerbungen an den Außenseiten und/oder den Innenseiten jeweils an den Armen des Kupplungsabschnitts gebildet. Bevorzugt können die Federabschnitte durch Einschnitte an den Außenseiten der Arme des Kupplungsabschnitts oder abwechselnd und versetzt zueinander jeweils an den Außen- und Innenseiten des Kupplungsabschnitts gebildet sein, die bezüglich der Längsachse des jeweiligen Arms senkrecht verlaufen und mindestens bis zur Hälfte des jeweiligen Arms eingeschnitten sind.

Bei der Zahnputzvorrichtung einer bevorzugten Ausführungsform ist der Antriebsvorrichtungsverbindungsabschnitt des Kupplungsabschnitts als zusätzlicher, dritter Arm ausgebildet, der sich von einem Verbindungspunkt der zwei Arme erstreckt, die mit den Mundeinsätzen verbunden sind, und wobei der dritte Arm optional einen zusätzlichen Federabschnitt umfasst. Der Längsquerschnitt durch die drei Arme kann dabei bevorzugt Y-Form aufweisen. Alternative Querschnitte sind Stimmgabelform oder, ohne den dritten Arm, U-Form oder Hufeisen-Form. Anstatt des dritten Arms kann der Antriebsvorrichtungskupplungsabschnitt auch direkt an der Stelle vorgesehen sein, an dem die zwei Arme, die mit den Mundstücken verbunden sind, zusammentreffen.

Bei der Zahnputzvorrichtung einer bevorzugten Ausführungsform umfassen die Mundeinsätze jeweils einen Basiskörper aus biokompatiblem Material, bevorzugt biokompatiblem Polyamid, der grob an eine Form der Zähne des Unterkiefers oder Oberkiefers eines Benutzers angepasst ist. Der Basiskörper ist für die Weiterleitung der Vibrationen hin zu den Reinigungsflächen verantwortlich und besteht in einer Ausführungsform vollständig aus einem biokompatiblen Polyamid. Besonders bevorzugt ist die Verwendung von biokompatiblem Polyamid, wie etwa PA6 oder PA12. In einer besonders bevorzugten Ausführungsform wird zur Fertigung der Basiskörper der Mundeinsätze Polyamid 12 verwendet, z.B. in der Ausführungsform PA 2200 (weiß) oder PA 2201 (transparent). Dem Polyamid können optional Additive oder verstärkende Fasern beigefügt werden.

Außerdem umfassen die Mundeinsätze der Ausführungsform ein an den Innenseiten des Basiskörpers, also an den während der Benutzung der Vorrichtung den Zähnen des Benutzers zugewandten Seiten, befestigten (z.B. über Einkleben, Eindrücken oder eine Art Klettverbindung) Einsatzkörper aus einem thermoplastischen Material, der passgenau an eine Form der Zähne des Unterkiefers oder Oberkiefers eines Benutzers angepasst ist. Als thermoplastisches Material wird in einer Ausführungsform ein thermoplastisches Elastomer verwendet. Bevorzugt sind dabei Polycaprolacton (PCL), z. B. Polydoh® der Firma Polymorph, thermoplastisches Polyesterelastomer TPE-E, z.B. Keyflex® der Firma LG Chemie, thermoplastisches Elastomer auf Urethanbasis TPE-U z. B. Elastollan® (BASF), oder Mischungen aus diesen Stoffen. Additive oder verstärkende Fasern können diesen Materalien optional zugefügt werden.

Bei der Zahnputzvorrichtung einer bevorzugten Ausführungsform weist jeder Basiskörper an den Innenseiten, die zur Befestigung des Einsatzkörpers dienen, eine gitterförmige Netzstruktur auf, um die Verbindung zwischen Basiskörper und Einsatzkörper zu verbessern. Die Außenseiten des Basiskörpers sind bevorzugt glatt, um deren Reinigung zu erleichtern und Irritationen der Wangenschleimhaut zu vermeiden.

Bei der Zahnputzvorrichtung einer bevorzugten Ausführungsform weisen die Einsatzkörper jeweils an ihren Innenflächen, also den Zähnen des Benutzers zugewandten Reinigungsflächen, eine Vielzahl von Reinigungsstrukturen auf. Die Reinigungsstrukturen können Gummierungsschichten, die auf den Innenflächen des Einsatzkörpers angebracht sind, Reinigungselemente, die einstückig mit Oberflächenbereichen des Einsatzkörpers ausgebildet sind und/oder Streifenbürsten, die auf den Innenflächen des Einsatzkörpers angebracht sind, umfassen. Beispiele und genauere Beschreibungen der Reinigungsstrukturen sowie deren Implementierung sind in der DE 102015109891 A1, Fig. 4 und [0050] beschrieben. So können (mit Bezug auf Fig. 4 der DE 102015109891 A1, wobei diese Figur hierin unter Bezugnahme aufgenommen ist) die Reinigungsstrukturen in Form von Reinigungselementen, die an der Oberfläche des Mundeinsatzes vorgesehen sein können. In diesem Fall handelt es sich jeweils um Reinigungselemente, die einstückig mit dem Mundeinsatz an dessen Oberfläche gebildet sind. Im Bereich der Kauflächen sind in dieser Ausführungsform rautenförmige Reinigungselemente vorgesehen, im Bereich der vorderen und hinteren Zahnflächen jeweils zylinderförmige Reinigungselemente. Aufgrund der Rautenform sind die Reinigungselemente härter als die zylinderförmigen Reinigungselemente, so dass im Bereich der Kauflächen eine intensivere Zahnputzwirkung erzielt wird. Selbstverständlich können die Reinigungselemente an den vorderen und hinteren Zahnflächen verschieden ausgebildet sein. Ebenso könnten in jedem der gezeigten Bereiche, d.h. im Bereich der hinteren Zahnflächen, der Kauflächen und der vorderen Zahnflächen, auch andere Reinigungsstrukturen vorgesehen sein, bspw. Gummierungsschichten und/oder Streifenbürsten.

Die vorliegende Offenbarung stellt zudem ein Anpassungsverfahren für einen Mundeinsatz für eine Zahnputzvorrichtung gemäß der obigen Beschreibung bereit, die für die gleichzeitige Reinigung mehrerer, vorzugsweise aller Zähne eines Benutzers geeignet ist. Das Verfahren umfasst in der Ausführungsform das Bereitstellen eines Einsatzkörpers, der aus einem thermoplastischen Elastomer hergestellt ist, das Erwärmen des Einsatzkörpers auf eine Temperatur, die eine einfache plastische Verformung des Einsatzkörpers zulässt. Diese Temperatur liegt bevorzugt über der menschlichen Körpertemperatur (ca. 37°C) und unterhalb einer Temperatur, die dem Benutzer während des folgenden Anpassungsprozesses erhebliche Schmerzen bereiten würde (ca. 70°C). Die bevorzugte Temperaturspanne liegt zwischen 30°C und 60°C und besonders bevorzugt zwischen 35°C und 50°C. Das Verfahren umfasst zudem das Einführen des erwärmten Einsatzkörpers in den Mundraum eines Benutzers; das Andrücken des erwärmten Einsatzkörpers an die Zähne des Ober- oder Unterkiefers des Benutzers; das Entfernen des Einsatzkörpers aus den Mundraum des Benutzers und das Abkühlen und somit Aushärten des Einsatzkörpers. Eine Verformung des Einsatzkörpers nach dem Abschluss des Verfahrens durch erneutes (unabsichtliches) Erwärmen über die obige Temperatur kann in einer optionalen Ausführungsform durch die bereits erwähnte Zugabe von Vernetzers in das Erwärmungs- und/oder Abkühlbad vermieden werden.

Bei dem Anpassungsverfahren einer bevorzugten Ausführungsform umfassen das Verfahren weiterhin das Zusammensetzen des Einsatzkörpers mit einem Basiskörper, der grob an eine Form der Zähne des Unterkiefers oder Oberkiefers des Benutzers angepasst ist, nach dem Schritt des Abkühlens oder zwischen den Schritten des Entfernens und des Abkühlens. Durch die Trennung von Basiskörper und Einsatzkörper wird das Andrücken des Einsatzkörpers im Mundraum des Benutzers erleichtert.

### Kurze Beschreibung der Zeichnungen

Fig. 1 ist eine senkrechte Längsquerschnittsansicht einer Zahnputzvorrichtung gemäß einer Ausführungsform der vorliegenden Offenbarung.
Fig. 2A ist eine Ansicht der Unterseite einer Antriebsvorrichtung gemäß einer Ausführungsform der vorliegenden Offenbarung.
Fig. 2B ist eine Ansicht der Oberseite einer Antriebsvorrichtung gemäß einer Ausführungsform der vorliegenden Offenbarung.
Fig. 3A bis 3D sind jeweils senkrechte Längsquerschnittsansichten von Kupplungsabschnitten unterschiedlicher Ausführungsformen und deren Federabschnitten gemäß der vorliegenden Offenbarung.
Fig. 4A ist eine Perspektivansicht eines Mundeinsatzes für den Oberkiefer gemäß einer Ausführungsform der vorliegenden Offenbarung.
Fig. 4B ist eine Perspektivansicht eines Mundeinsatzes für den Unterkiefer gemäß einer Ausführungsform der vorliegenden Offenbarung.
Fig. 5 ist ein Flussdiagramm eines Anpassungsverfahrens für einen Mundeinsatz gemäß einer Ausführungsform der vorliegenden Offenbarung.

### Ausführliche Beschreibung der bevorzugten Ausführungsformen

Im Folgenden wird die vorliegende Offenbarung anhand von Figuren beschrieben, die schematisch verschiedene beispielhafte Ausführungsformen zeigen. Die in den Figuren dargestellten Ausführungsformen sind nicht maßstabgerecht dargestellt, wobei zum Teil Abmessungen gewählt wurden, die das Prinzip der vorliegenden Erfindung klarer zur Geltung bringen.

Sowohl in der Beschreibung als auch in den Figuren werden gleiche oder ähnliche Bezugszeichen verwendet, um auf gleiche oder ähnliche Elemente oder Komponenten Bezug zu nehmen. Um die Beschreibung knapp zu halten werden Elemente die bereits in anderen Figuren erwähnt wurden nicht unbedingt in der Beschreibung zu jeder weiteren Figur nochmals explizit erwähnt.

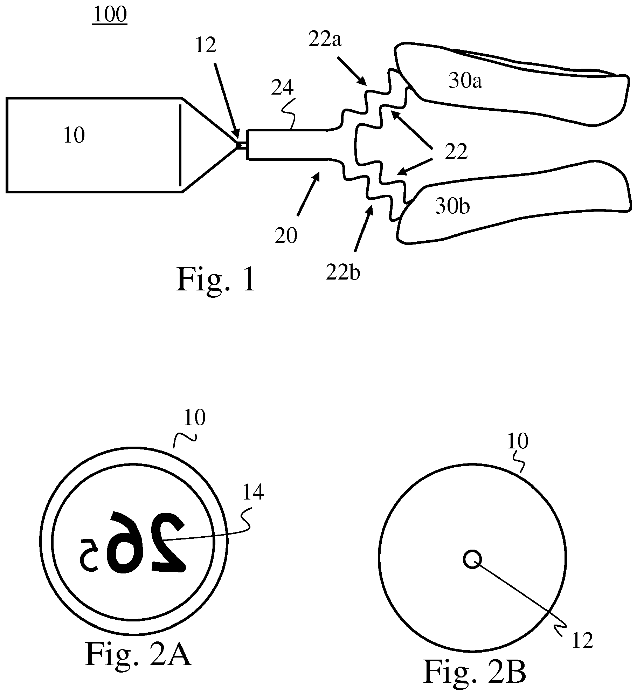

Fig. 1 ist eine senkrechte Längsquerschnittsansicht einer Zahnputzvorrichtung gemäß einer Ausführungsform der vorliegenden Offenbarung. Wie in Fig. 1 dargestellt, umfasst die Zahnputzvorrichtung dieser Ausführungsform eine Antriebsvorrichtung 10, einen Kupplungsabschnitt 20 und zwei Mundeinsätze 30a und 30b, jeweils einen für den Oberkiefer und einen für den Unterkiefer eines Benutzers der Zahnputzvorrichtung. Der Kupplungsabschnitt 20 umfasst hier zwei Arme 22, die mit den Mundstücken 30a, 30b gekoppelt sind oder mit diesen einstückig ausgebildet sind. Die Arme 22 weisen jeweils einen Federabschnitt 22a, 22b auf, die hier als mehrere Biegungen (z.B. S-förmig) in der Senkrechten (bezogen auf die Position während der Benutzung) ausgebildet sind. Ein Antriebsvorrichtungsverbindungsabschnitt 24 dient zur Verbindung von Kupplungsabschnitt 20 und Antriebseinheit 10. Hier ist der Antriebsvorrichtungsverbindungsabschnitt 24 als ein dritter Arm ausgebildet, der sich von der Verbindungsstelle der Arme 22 weg erstreckt.

Fig. 2A ist eine Ansicht der Unterseite einer Antriebsvorrichtung 10 gemäß einer Ausführungsform der vorliegenden Offenbarung. Fig. 2B ist eine Ansicht der Oberseite einer Antriebsvorrichtung 10 gemäß einer Ausführungsform der vorliegenden Offenbarung. Die Antriebsvorrichtung 10 der Ausführungsform weist ein Gehäuse auf, in dem ein Motor (z.B. ein Schallwandler), einen Akku (z.B. Li-Ionen-Akku), eine Steuerung bzw. Steuerplatine (z.B. Prozessor, Motorsteuerung und einen Datenspeicher mit Anweisungen für die Motorsteuerung) und eine Anzeigevorrichtung, z.B. ein LED-Display, einzelne farbige LED-Leuchten oder E-Ink Display, 14 angeordnet sind. Die einzelnen Elemente sind bevorzugt von der Außenwelt wasserdicht abgeschlossen. Lediglich die Anzeigevorrichtung 12 kann durch einen Benutzer betrachtet werden. Zudem können ein oder mehrere Schalter (nicht gezeigt) an dem Gehäuse angeordnet sein, um Einstellungen der Steuerung vorzunehmen oder den Betriebszustand der Antriebsvorrichtung zu ändern. Der Akku wird in einem Ladezustand, z.B. in einer Ladestation (nicht gezeigt), bevorzugt drahtlos mit Energie geladen.

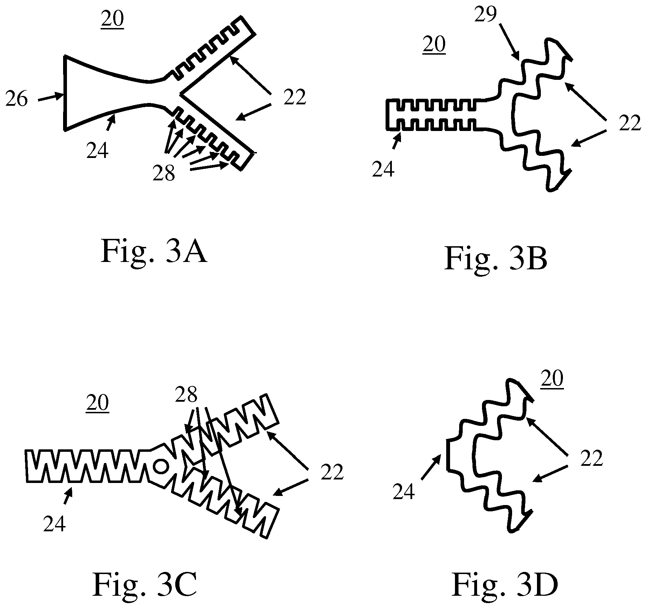

Die Antriebsvorrichtung 10 wird über eine Halterung 12 (Fig. 1 und 2B) mit dem Kupplungsabschnitt 20 (z.B. Fig. 1) verbunden. In der dargestellten Ausführungsform der Fig. 2B ist die Halterung ein runder Stift, der an einer Seite abgeflacht ist, um eine Rotation der Antriebsvorrichtung 10 zu dem Kupplungsabschnitt 20 zu verhindern. Der Kupplungsabschnitt 20 weist an dem Antriebsvorrichtungsverbindungsabschnitt 24 in dieser Ausführungsform eine entsprechend geformte Öffnung auf (in Fig. 3A mit Bezugszeichen 26 angedeutet), die eine sichere aber lösbare Verbindung zwischen Kupplungsabschnitt 20 und Antriebsvorrichtung 10 und eine effiziente Schwingungsübertragung zwischen diesen gewährleistet.

Die Antriebsvorrichtung 10 wird bevorzugt über einen akkubetriebenen, stufenlos von 100 bis 500 Hz, bevorzugt 200 Hz bis 350 Hz regulierbaren Schallwandler betrieben. Vibrationsfrequenz und Amplitude werden beispielsweise durch eine exzentrisch rotierende Masse erzeugt. Alternativ sind auch der Betrieb über einen Piezomotor oder andere geeignete Antriebsformen möglich.

Die Steuerung (nicht gezeigt) ist beispielsweise als Steuerplatine mit einem Prozessor ausgeführt, der Anhand von Anweisungen eines in der Antriebsvorrichtung verbauten Speichers, z.B. eines Read-Only-Memorys (ROM), den Motor gezielt steuert. Die Steuerparameter können Frequenz, Schwingungsamplitude und bestimmte zeitliche Variationen dieser sowie die Anwendungsdauer selbst umfassen.

In einer Ausführungsform sind unterschiedliche Programme (z.B. für Kinder oder unterschiedliche Zahnhärte- oder Empfindlichkeitsgrade) über einen am Gehäuse der Antriebsvorrichtung angebrachten Schalter (nicht gezeigt) auswählbar.

Die Anzeigevorrichtung 12 der Antriebsvorrichtung 10 der vorliegenden Ausführungsform zeigt beispielsweise einen ausgewählten Modus, den Betriebszustand (an/aus) und/oder die verbleibende Dauer der Anwendung an. In einer bevorzugten Ausführungsform ist die Anzeigevorrichtung 12 so an einer Seite der Antriebsvorrichtung 10 angebracht, dass diese während der Benutzung über den Badezimmerspiegel ablesbar ist (spiegelverkehrte Anzeige von Zeichen, siehe Fig. 2A). In einer besonders bevorzugten Ausführungsform befindet sich, wie in Fig. 2A dargestellt, an der Frontseite ein E-Ink Display, das während der Benutzung einen Timercountdown und im Ruhezustand den Ladezustand des Akkus anzeigt.

In einer Ausführungsform der vorliegenden Offenbarung weist die Antriebsvorrichtung 10 inklusive Akku, Steuerplatine, Magnetmotor und Gehäuse ein Gewicht von 60 bis 80 Gramm, einen Durchmesser von 30 bis 40 mm und eine Länge von 50 bis 70 mm auf. Maße und Gewicht der Antriebsvorrichtung 10 ermöglichen die freihändige Benutzung nach dem Einschalten. Die Steuerung erlaubt in einer Ausführungsform zudem während der Anwendung eine automatische Variation von Frequenz und Amplitude gemäß einem festgelegten Nutzungsprofil. Die Nutzungsdauer ist ebenfalls vorzugsweise zwischen 10 und 90 Sekunden, besonders bevorzugt 20 und 60 Sekunden festgelegt. Nach dem Einschalten schaltet sich die Zahnputzvorrichtung 100 bzw. die Antriebsvorrichtung 10 nach Ablauf der vorgegebenen Zeit automatisch ab. Im Ruhezustand wird der Akku automatisch über eine in einen Aufbewahrungsbehälter integrierte Induktionsladeplattform aufgeladen.

Mit Bezug auf Fig. 1 und 3A-3D werden nun unterschiedliche bevorzugte Ausführungsformen der Kupplungsabschnitte 20 und der Federabschnitte 22a und 22b beschrieben. Auch wenn die Kupplungsabschnitte in den Fig. 3A-3D als einzelne Elemente dargestellt sind, sollte verstanden werden, dass einige Ausführungsformen der vorliegenden Offenbarung eine einteilige Ausbildung von Kupplungsabschnitt und einem oder beiden der Mundeinsätze 30a und 30b, z.B. durch Spritzgießen oder, bevorzugt, ein 3D-Druckverfahren vorsehen. Zudem sind in Fig. 3A-3D die Federabschnitte als einteilige Abschnitte des Kupplungselements dargestellt. Es sollte jedoch verstanden werden, dass einige Ausführungsformen der vorliegenden Offenbarung eine lösbare Verbindung je zwei, drei, vier oder aller Elemente Kupplungsabschnitt 20, Federabschnitten 22a, 22b und Mundstücken 30a, 30b vorsehen. Besonders bevorzugt ist jedoch die dargestellte, einteilige Ausbildung des Kupplungsabschnitts 20 mit den Federabschnitten 22a, 22b.

Die Verbindung zwischen Antriebsvorrichtung 10 und den beiden Mundeinsätzen 30a, 30b erfolgt über einen Kupplungsabschnitt 20. Er hat eine Länge von 25 mm bis 45 mm und eine Breite von 7 mm bis 20 mm. Das Gewicht liegt zwischen 3 und 10 Gramm. Antriebseitig besitzt der Kupplungsabschnitt 20 eine Bohrung 26 (in Fig. 3A angedeutet) in einem Endabschnitt des Antriebsvorrichtungsverbindungsabschnitts 24. Die Bohrung 26 dient in der vorliegenden Ausführungsform zur Aufnahme des Schwingschaftes 12 der Antriebseinheit 10. Jedoch können die Elemente Stift 12 und Bohrung 26 auch vertauscht sein. In einer Ausführungsform ist die Bohrung 26 zur genauen Passform mit einer Metallhülse, vorzugsweise Aluminium, versehen.

Fig. 3A ist eine senkrechte Längsquerschnittsansicht eines Kupplungsabschnitts 20 einer besonders bevorzugten Ausführungsform der vorliegenden Offenbarung. Der Kupplungsabschnitt 20 weist zwei Arme 22 auf, die jeweils einen Federabschnitt 22a, 22b (in Fig. 3A-3D sind die Bezugszeichen 22a, 22b der Übersichtlichkeit halber nicht erneut angezeigt) umfassen. In einigen Ausführungsformen erstreckt sich die Federabschnitte über die gesamt Länge eines Arms (siehe etwa Fig. 3B-3D). Bevorzugt erstrecken sich die Federabschnitte über 20%-100% der Länge eines gefederten Arms und insbesondere über 35%-95% oder besonders bevorzugt 65%-90% des Arms. Die Federabschnitte sind durch mehrere Trog-förmige Einschnitte 28 an den Außenflanken der Arme 22 des Kupplungsabschnitts 20 ausgebildet. Die Kanten der Einschnitte sind bevorzugt abgerundet und alternative Einschnittformen (V-förmig, U-förmig etc.) sind ebenfalls möglich. Hier sind Einschnitte 28 bis ca. zur Hälfte der Dicke der Arme 22 eingeschnitten. In anderen bevorzugten Ausführungsformen sind die Einschnitte tiefer in die Arme eingeschnitten, z.B. zwischen 50-90%, bevorzugt zwischen 60-80% der Stärke der Arme im senkrechten Querschnitt.

In der Ausführungsform der Fig. 3A spaltet sich der Antriebsvorrichtungsverbindungsabschnitt 24 nach ca. 7 bis 15 mm Y-förmig zu zwei Einzelsträngen, den Armen 22, auf, die, im Falle einer zweiteiligen Ausführung, mundstückseitig jeweils mit einer Bohrung zur Aufnahme der Mundeinsätze versehen sein können. Die beiden Einzelstränge 22 haben in dem dargestellten senkrechten Querschnitt eine Stärke von 3 bis 6 mm und können einen runden oder ovalen Querschnitt (senkrecht zum dargestellten Querschnitt) aufweisen. Zur Verbesserung der Flexibilität der Arme 22 sind diese mit den mehreren Einkerbungen 28 versehen.

Vorzugsweise besteht der Kupplungsabschnitt 20 zur besseren Kontrolle des Eigenresonanzverhaltens aus dem gleichen Material, wie die Halterungen bzw. Basiskörper der Mundeinsätze 30a, 30b. Am bevorzugtesten ist ein biokompatibles Material, wie biokompatibles Polyamid zu verwenden Besonders bevorzugt ist die Verwendung von PA6 oder PA12. In einer besonders bevorzugten Ausführungsform wird zur Fertigung der Kupplungsabschnitte 20 Polyamid 12 verwendet, z.B. in der Ausführungsform PA 2200 (weiß) oder PA 2201 (transparent).

Fig. 3B zeigt eine weitere Ausführungsform eines Kupplungsabschnitts 20 der vorliegenden Offenbarung. Hier sind die Arme 22 mit Kupplungsabschnitten 29 versehen, die als in der senkrechten Ebene auf und ab gebogene Mäander ausgebildet sind. Andere Ausbildungen der Mäander, z.B. in der waagerechten Ebene (d.h. senkrecht zur dargestellte Bildebene) oder als Helix- bzw. Spiralförmig gebogene Elemente. Die Arme der Federabschnitte sind bevorzugt im Vergleich zu den Armen 22 ohne Federabschnitte verjüngt. In einer Ausführungsform beträgt die Stärke der Arme im Bereich der Federabschnitte 10-50%, bevorzugt 20-40% der Stärke der Arme ohne die Federabschnitte.

Der Antriebsvorrichtungsverbindungsabschnitt 24 kann optional, wie in Fig. 3B dargestellt, ebenfalls Federabschnitte umfassen bzw., wie in Fig. 3B beispielhaft dargestellt, durch einen Federabschnitt, der sich zwischen Antriebsvorrichtung und Verbindungsstelle der Arme 22 erstreckt, bereitgestellt sein. Hier sind diese an gleichen Positionen der Ober- und der Unterseite des Antriebsvorrichtungsverbindungsabschnitts 24 vorgesehen. Entsprechende Federabschnitte können auch als die Federabschnitte 22a, 22b vorgesehen sein. Wichtig für die Effekte der vorliegenden Offenbarung sind jedoch hauptsächlich die Federabschnitte der Arme 22.

Fig. 3C zeigt eine weitere Ausführungsform eines Kupplungsabschnitts 20 der vorliegenden Offenbarung. Hier sind die Arme 22 und der Antriebsvorrichtungsverbindungsabschnitt 24 mit dem gleichen Federungsmuster versehen, das durch V-förmige Einschnitte 28 abwechselnd an der Ober- und Unterseite der Arme 22 und des Antriebsvorrichtungsverbindungsabschnitts 24 eingeschnitten sind.

Fig. 3D zeigt eine weitere Ausführungsform eines Kupplungsabschnitts 20 der vorliegenden Offenbarung. Hier sind die Arme 22, ähnlich der Fig. 3B, durch auf und ab biegen der verjüngten Arme 22 gebildet. Jedoch ist der Antriebsvorrichtungsverbindungsabschnitt 24 nicht als zusätzlicher Arm, sondern als ein einfaches Anbindungsmittel (z.B. Öffnung, Bohrung oder Stift) an der Position vorgesehen, an der die Arme 22 zusammenlaufen. Diese Ausführungsform des Antriebsvorrichtungsverbindungsabschnitts 24 ist mit den Ausbildungen der Arme gemäß Fig. 1 und 3A-3C uneingeschränkt kompatibel.

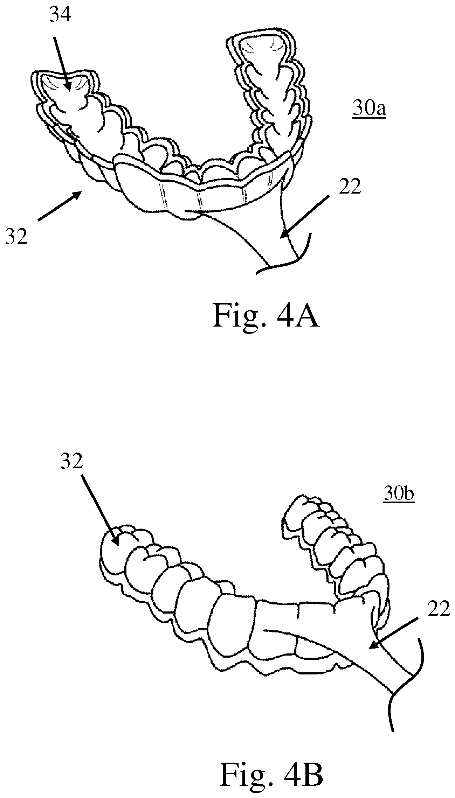

Fig. 4A ist eine Perspektivansicht eines Mundeinsatzes für den Oberkiefer gemäß einer Ausführungsform der vorliegenden Offenbarung. Fig. 4B ist eine Perspektivansicht eines Mundeinsatzes für den Unterkiefer gemäß einer Ausführungsform der vorliegenden Offenbarung. Mit Bezug auf die Fig. 4A und 4B umfassen die Mundeinsätze 30a und 30b einen Basiskörper 32 und einen Einsatzkörper 34. Der Basiskörper 32 ist mit einem der Arme 22 des Kupplungsabschnitts 20 verbunden. Wie bereits beschrieben wurde, kann diese Verbindung durch eine einteilige Ausbildung oder eine lösbare Verbindung (Schraub- oder Steckverbindung) erreicht werden.

Die Mundeinsatzelemente 30a, 30b sind demnach in einer besonders bevorzugten Ausführungsform der Offenbarung zweistufig aufgebaut. Der Basiskörper 32 ist für die Weiterleitung der Vibrationen hin zu den Reinigungsflächen verantwortlich und besteht bevorzugt aus biokompatiblem Polyamid. Biokompatibles Polyamid hat ein breites Anwendungsspektrum in der Medizin und wird beispielsweise für Stents, Katheter, Implantate etc. verwandt. Obwohl die Anatomie des menschlichen Gebisses individuell verschieden ist, reichen 6 bis 8 verschieden dimensionierte Basiskörper 32 aus, um die Gebissanatomie 98 % aller erwachsenen Individuen grob nachzubilden. An den Seitenflächen weisen die Basiskörper 32 eine gitterförmige Netzstruktur auf (nicht dargestellt) und reichen in der Höhe ungefähr bis zum Gingivarand.

Die Basiskörper 32 haben bevorzugt eine Wandstärke von 0,8 bis 1,5 mm und wiegen zwischen 3 und 6 Gramm. Der Abstand zu den Zahnseitenflächen beträgt zwischen 1 und 5 mm. Die Außenflächen sind bevorzugt glattpoliert, während die Innenflächen eine grobe bzw. aufgeraute Strukturierung aufweisen, um die Verbindung zu dem Einsatzkörper 34 zu verbessern. Die Strukturierung kann in einer Ausführungsform durch eine netzartige Verteilung sich kreuzender Stege auf der Oberfläche er Innenflächen bereitgestellt sein, wobei die Abstände benachbarter paralleler Stege weiterhin bevorzugt zwischen 0,5mm und 2mm liegt. Die Basiskörper 32 werden z.B. im industriellen Spritzgussverfahren oder durch ein 3D-Druckverfahren hergestellt.

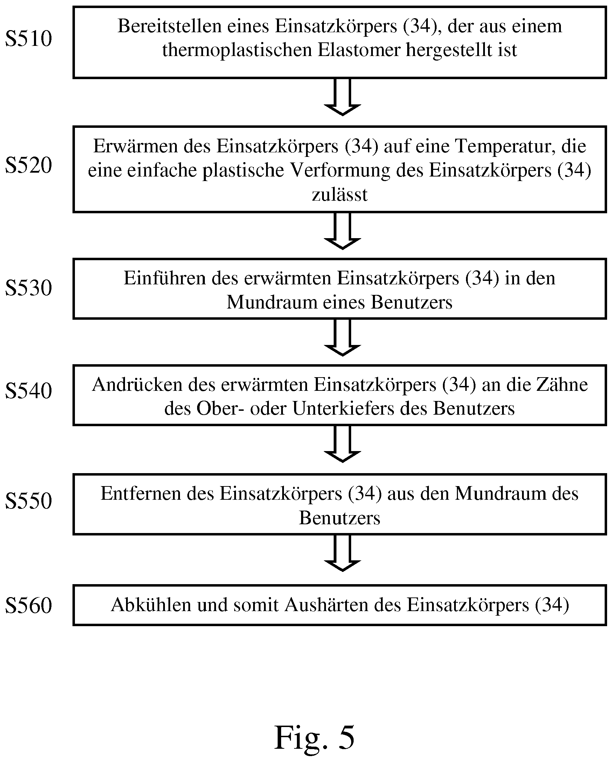

Zur genauen Anpassung an die Gebissanatomie des Benutzers eignen sich zwei Verfahren. Ein besonders bevorzugtes Anpassungsverfahren ist die Beschichtung mit thermoplastischen Elastomeren, die in Fig. 5 als Ablaufdiagramm dargestellt ist.

Auf die Innenflächen der Basiskörper 32 werden in einer solchen Ausführungsform thermoplastische Materialien, bevorzugt Elastomere, aufgetragen bzw. als Einsatzkörper eingesetzt, die in der Gitterstruktur der Seitenflächen fixiert sind. Die bevorzugten thermoplastischen Elastomere sind Kunststoffe, die sich bei Raumtemperatur vergleichbar den klassischen Elastomeren verhalten, sich jedoch unter Wärmezufuhr plastisch verformen lassen und somit ein thermoplastisches Verhalten zeigen. Die Beschichtung bzw. der Einsatzkörper hat in einer Ausführungsform eine Wandstärke von 1 bis 5mm und überlappt das Zahnfleisch um 2 bis 4 mm.

Auf den Innenseiten kann das Elastomer rauten- oder noppen- oder zylinderförmige Reinigungsstrukturen aufweisen. Vorzugsweise beträgt der Durchmesser einer solchen Struktur zwischen 0,2 und 0,4 mm. Der Abstand zwischen den Seitenlinien von 2 Strukturen beträgt 0,2 bis 0,4mm. Die Abstände haben eine Tiefe von 0,5 bis 1 mm. Die verschiedenen Geometrien können untereinander frei kombiniert werden.

Sobald die für den Benutzer richtige Basisgröße des Basiskörpers 32 ausgewählt wurde, wird der Mundeinsatz für einen gewissen Zeitraum (z.B. 30-60 Sekunden) in ein heißes Wasserbad gelegt. Die Temperatur des Wasserbads liegt bevorzugt über der menschlichen Körpertemperatur (ca. 37°C) und unterhalb einer Temperatur, die dem Benutzer während des folgenden Anpassungsprozesses erhebliche Schmerzen bereiten würde (ca. 70°C). Die bevorzugte Temperaturspanne liegt zwischen 30°C und 60°C und besonders bevorzugt zwischen 35°C und 50°C.Die Elastomerstruktur des Mundeinsatzes wird danach im Mund des Benutzers manuell an die Zahnseitenflächen und den Zahnfleischrand anmodelliert. Nach Anpassung wird der Mundeinsatz für einen geeigneten Zeitraum, z.B. 20-40 Sekunden, in kaltes Wasser (z.B. zwischen 0°C und 20°C, bevorzugt zwischen 4°C und 15°C) gelegt und kann daraufhin aushärten. In einer Ausführungsform können dem kalten Wasserbad Additive beigefügt sein (Vernetzer), die das Aushärten des thermoplastischen Materials fördern oder verstärken.

Wie bereits oben erwähnt, wird als thermoplastisches Material in einer Ausführungsform ein thermoplastisches Elastomer verwendet. Bevorzugt sind dabei Polycaprolacton (PCL), z. B. Polydoh® der Firma Polymorph, thermoplastisches Polyesterelastomer TPE-E, z.B. Keyflex® der Firma LG Chemie, thermoplastisches Elastomer auf Urethanbasis TPE-U z. B. Elastollan® (BASF), oder Mischungen aus diesen Stoffen. Alle dieser bevorzugten Stoffe weisen zwischen 60 und 65°C eine geeignete thermoplastische Verformbarkeit auf. Ihre Glastemperatur liegt bei minus 60 bis 70°C. Auch bei einer Temperatur, die die thermoplastische Verformung erlaubt, bleiben die Elastomere formstabil, solange keine aktive Formveränderung durch z.B. manuellen Druck herbeigeführt wird. Die Temperatur, bei der die Elastomere unter Einfluss der Schwerkraft zerfließen, liegt jenseits von 130°C. Wenn die Materialien in ein Wasserbad von 70°C für 45 Sekunden gelegt werden, bleiben sie für ca. 2 bis 3 Minuten verformbar (thermoplastisch), obwohl sie an der Oberfläche schon auf ca. 35°C abgekühlt sind, bevor sie in den Mund des Benutzers zum Anpassen eingesetzt werden. Die Stabilisierung der Form erfolgt nach dem Andrücken an die Gebissform des Benutzers durch Eintauchen in ein kaltes Wasserbad. Bis sie endgültig komplett durchgehärtet sind, können nochmals 24 Stunden Ruhezeit nötig sein. Additive oder verstärkende Fasern können optional zugefügt werden.

Eine besonders erwünschte Eigenschaft der obigen thermoplastischen Elastomere besteht darin, dass sie beliebig oft anpassbar sind. Sie müssen dafür erneut für einen gewissen Zeitraum (z.B. 45 Sekunden) in ein Wasserbad (z.B. mit 70°C) gelegt werden. Abspülen mit heißem Wasser alleine kann daher nicht zu einer Verformung führen. Sollte unter extremen Bedingungen (z.B. direkte, intensive Sonneneinstrahlung) eine Verformung auftreten, lässt sich diese jedoch leicht korrigieren, indem erneut eine Prozedur wie bei der Erstanpassung durchgeführt wird. Der optionale Zusatz von Vernetzern im Wasserbad bei der Anpassung könnte eine unter Umständen notwendige erneute Anpassung dauerhaft verhindert wird.

Die Gitterstruktur des biokompatiblen Polyamids des Basiskörpers 32 reicht aus, um eine effektive Vibrationsübertragung zu gewährleisten, während das modellierte Elastomer des Einsatzkörpers 34 eine ausreichende Anpassung an die Anatomie des Benutzers ermöglicht.

Eine alternative Ausführungsform der vorliegenden Offenbarung umfasst das Anbringen von Streifenbürsten. Streifenbürsten haben einen kontinuierlichen Besatz und können exakt auf die Länge und Breite der Reinigungsfläche zugeschnitten werden. Als Bürstenmaterial eignen sich Nylon oder Fiber in der Ausführungsform weich, mittel und hart. Sie können in einer gefrästen Nut verankert oder auf die Innenflächen der Mundeinsätze geklebt werden.

### Vergleichsbeispiele

Neben der chemischen (Zahncreme) und kinetischen (dynamische Flüssigkeitsströmung) Wirkung der Zahnputzvorrichtung der vorliegenden Offenbarung ist auch die mechanische Putzbewegung für das Reinigungsergebnis von Bedeutung. Die mechanische Wirkung wird durch die Amplitude des Vibrationsmotors der Antriebsvorrichtung 10 erzeugt. Sie steht in exponentieller Korrelation zur Frequenz, die vom Prozessor durch die Spannung geregelt wird. Auch wenn die erzeugte Amplitude am Motor selbst als Torsionskraft auftritt, ist sie am Zielort, den Mundeinsätzen 30a, 30b, als räumliche Dislokation messbar. Die Größe der Dislokation ist entscheidend abhängig vom gewählten Übertragungsweg. In der bereits diskutierten Patentanmeldung DE 102015109891 A1 wird eine Kupplungsvorrichtung mit linearem Übertragungsweg beschrieben, die bei zwei separaten Mundeinsätzen auch zwei getrennte Vibrationsmotoren benötigt. Die hier beschriebene Kupplung 20 ermöglicht es, mit einem Magnetmotor zwei separate Mundeinsätze gleichzeitig in Vibration zu versetzen ohne dabei eine Verschlechterung der Vibrationsamplitude und somit Reinigungswirkung, insbesondere im Bereich der Schneidezähne, in Kauf nehmen zu müssen.

Eine ausreichende mechanische Putzwirkung wird erzielt, wenn eine räumliche Verschiebung am Zielort von wenigstens 0,08 mm, bevorzugt wenigstens 0,12 mm auftritt. Um die Dislokation einer steifen Kupplung (d.h. einer Kupplung über zwei Einzelmotoren oder ein steifes Verbindungsteil zu einem einzigen Motor gemäß der DE 102015109891 A1) mit einem gefederten Kupplungsabschnitt gemäß der vorliegenden Offenbarung vergleichen zu können, wurde die räumliche Verschiebung an zwei definierten Punkten der Mundeinsätze im Rahmen von Vergleichstests gemessen. Messpunkt I liegt 10 mm seitlich von der Mitte der Halterung und Messpunkt II 70 mm in Richtung der Backenzähne entfernt. Als Vergleichsmesswert wurde eine Vorrichtung mit zwei Motoren gemäß der DE 102015109891 A1 verwendet. Die Messungen der gefederten Kupplung gemäß der vorliegenden Offenbarung wurden mit einem Kupplungsabschnitt gemäß der Fig. 3A aus biokompatiblem Polyamid (Polyamid 12) durchgeführt.

| Vergleichsmesspunkt I | gefedert Messpunkt I | Vergleichsmesspunkt II | gefedert Messpunkt II |
|---|---|---|---|
| 0,06 mm | 0,17 mm | 0,24 mm | 0,29 mm |

Die Messergebnisse sind Durchschnittswerte von jeweils 50 durchgeführten Messungen an beiden Messpunkten bei einer maximalen Abweichung von ± 11 % bezogen auf die durchschnittliche Dislokation.

Während die mechanische Wirkung bei beiden Kupplungen im Bereich der Backenzähne ausreichend ist, ergibt sich bei Einsatz des Y-Bauteils im Bereich der Frontzähne eine fast dreifach größere Dislokation im Vergleich zum linearen Bauteil. Damit ist durch die Geometrie der Y-Kupplung auch im Bereich der Frontzähne eine ausreichende mechanische Reinigungswirkung erzielbar.

### Vorteile der Erfindung

Die vorliegende Erfindung ermöglicht eine erhebliche Verbesserung der Reinigungsqualität durch gleichbleibenden Druck und Reinigung aller Zahnoberflächen.
- optimaler Reinigungsstandard, da Benutzerfehler durch den automatischen Reinigungsvorgang ausgeschlossen sind.
- Schutz des Zahnfleischrandes vor Verletzungen durch manuell geführte Zahnbürsten.
- Erhebliche Zeitersparnis (im Idealfall 10-30 Sekunden versus 3 Minuten bei manueller Reinigung)

Mit dem beschriebenen Anpassungsverfahren können zudem preisgünstig größere Stückzahlen von Reinigungsprothesen passgenau hergestellt werden ohne die Wirkung des verbesserten Kupplungsabschnitts der vorliegenden Offenbarung abzuschwächen.

### Anwendung des vollautomatischen Zahnreinigungsgeräts

Der Benutzer nimmt die Mundeinsätze 30 aus einem Aufbewahrungsbehälter und verbindet sie ggf. mit dem Kupplungsabschnitt. Er sprüht oder schmiert das Mund- und Zahnpflegemittel auf die Reinigungsflächen der Mundeinsätze 30 und verbindet den Antrieb 10 ggf. mit dem Kupplungsabschnitt. Er nimmt die Mundeinsätze 30 in den Mund und stellt Kontakt mit den Zähnen her. Aufgrund der exakten Anfertigung der Mundeinsätze 30 ist eine Dislokation im Mundraum nicht möglich. Durch Drücken des Einschaltknopfes am Antriebsgehäuse startet das Reinigungsprogramm. Während des 20 bis 50 Sekunden andauernden Reinigungsprogramms ändert der Prozessor Frequenz und in Abhängigkeit davon auch die Amplitude des Schwingungsmotors mehrfach. Mit Beendigung des Reinigungsprogramms schaltet sich das Gerät automatisch ab. Nach erfolgtem Abspülen der Mundeinsätze mit fließendem Wasser wird sie im Aufbewahrungsbehälter in einer desinfizierenden Lösung abgelegt.

Es wird für Fachleute offensichtlich sein, dass verschiedene Modifikationen und Variationen an der Struktur der vorliegenden Erfindung vorgenommen werden können, ohne den Schutzbereich oder das Wesen der Erfindung zu verlassen. Hinsichtlich der vorhergehenden Ausführungen ist es beabsichtigt, dass die vorliegende Erfindung Modifikationen und Variationen dieser Erfindung überdeckt, falls sie in den Schutzbereich der folgenden Ansprüche und ihrer Äquivalente fallen.

## Patentansprüche

1. Zahnputzvorrichtung (100) für die gleichzeitige Reinigung mehrerer, vorzugsweise aller Zähne eines Benutzers, umfassend:
einen Mundeinsatz (30a) für den Oberkiefer des Benutzers und einen Mundeinsatz (30b) für den Unterkiefer des Benutzers;
eine Antriebsvorrichtung (10), die eine Halterung (12) aufweist; und
einen Kupplungsabschnitt (20), der zwei Arme (22) und einen Antriebsvorrichtungsverbindungsabschnitt (24) aufweist, wobei die Mundeinsätze (30a, 30b) jeweils mit einem Arm (22) des Kupplungsabschnitts (20) verbunden sind und der Antriebsvorrichtungsverbindungsabschnitt (24) mit der Antriebsvorrichtung (10) über deren Halterung (12) verbunden ist,
**dadurch gekennzeichnet dass**, die Arme (22) des Kupplungsabschnitts (20), die mit den Mundeinsätzen (30a, 30b) verbunden sind, jeweils mindestens einen Federabschnitt (22a, 22b) aufweisen.

2. Zahnputzvorrichtung (100) gemäß Anspruch 1, wobei die Mundeinsätze (30a, 30b) jeweils für die Reinigung der Zähne des gesamten Oberkiefers oder des gesamten Unterkiefers des Benutzers angepasst sind.

3. Zahnputzvorrichtung (100) gemäß einem der vorstehenden Ansprüche, wobei die Antriebsvorrichtung (10) angepasst ist, um eine Schwingung von 100 Hz bis 500 Hz, bevorzugt 200 Hz bis 350 Hz, über den Y Kupplungsabschnitt (20) an die Mundeinsätze (30a, 30b) zu übertragen.

4. Zahnputzvorrichtung (100) gemäß einem der vorstehenden Ansprüche, wobei die Antriebsvorrichtung (10) angepasst ist, um den Kupplungsabschnitt (20) und die Mundeinsätze (30a, 30b) in einer Ebene zum Schwingen, bevorzugt in einer Sinuskurve, anzutreiben, die der Ebene entspricht, in der die Arme (22) des Kupplungsabschnitts (20) liegen.

5. Zahnputzvorrichtung (100) gemäß einem der vorstehenden Ansprüche, wobei der Kupplungsabschnitt (20) mit den Federabschnitten (22a, 22b) einstückig ausgebildet ist.

6. Zahnputzvorrichtung (100) gemäß einem der Ansprüche 1-4, wobei die Federabschnitte (22a, 22b) über Steck- oder Schraubverbindungen austauschbar sind.

7. Zahnputzvorrichtung (100) gemäß einem der Ansprüche 1-5, wobei die Federabschnitte (22a, 22b) einstückig mit den Mundeinsätzen (30a, 30b) ausgebildet sind.

8. Zahnputzvorrichtung (100) gemäß einem der vorstehenden Ansprüche, wobei die Federabschnitte (22a, 22b) im Vergleich zu dem Arm (22) des Kupplungsabschnitts (20), mit dem sie verbunden sind, verjüngt sind und geschwungen bzw. S-förmig auf und ab gebogen angeordnet sind.

9. Zahnputzvorrichtung (100) gemäß Anspruch 8, wobei die Verjüngung der Arme (22) des Kupplungsabschnitts (20) durch Plattdrücken der jeweiligen Arme (22) des Kupplungsabschnitts (20) gebildet ist und diese anschließend durch Auf- und Abbiegen der plattgedrückten Arme die S-Form (29) bilden, in der Ebene, die längs durch die Arme (22) und den Antriebsvorrichtungsverbindungsabschnitt (24) des Kupplungsabschnitts (20) verläuft.

10. Zahnputzvorrichtung (100) gemäß einem der Ansprüche 1-7, wobei die Federabschnitte (22a, 22b) durch mehrere Einkerbungen (28) an den Außenseiten und/oder den Innenseiten jeweils an den Armen (22) des Kupplungsabschnitts (20) gebildet sind.

11. Zahnputzvorrichtung (100) gemäß Anspruch 10, wobei die Federabschnitte (22a, 22b) durch Einschnitte (28) an den Außenseiten der Arme (22) des Kupplungsabschnitts (20) oder abwechselnd und versetzt zueinander jeweils an den Außen- und Innenseiten des Kupplungsabschnitts (20) gebildet sind, die bezüglich der Längsachse des jeweiligen Arms (22) senkrecht verlaufen und mindestens bis zur Hälfte des jeweiligen Arms (22) eingeschnitten sind.

12. Zahnputzvorrichtung (100) gemäß einem der vorstehenden Ansprüche, wobei der Antriebsvorrichtungsverbindungsabschnitt (24) des Kupplungsabschnitts (20) als zusätzlicher, dritter Arm ausgebildet ist, der sich von einem Verbindungspunkt der zwei Arme (22) erstreckt, die mit den Mundeinsätzen (30a, 30b) verbunden sind, und wobei der dritte Arm optional einen zusätzlichen Federabschnitt umfasst.

13. Zahnputzvorrichtung (100) gemäß einem der vorstehenden Ansprüche, wobei die Mundeinsätze (30a, 30b) jeweils umfassen:
einen Basiskörper (32) aus biokompatiblem Polyamid, der grob an eine Form der Zähne des Unterkiefers oder Oberkiefers eines Benutzers angepasst ist; und
ein an den Innenseiten des Basiskörpers befestigter Einsatzkörper (34) aus einem thermoplastischen Elastomer, der passgenau an eine Form der Zähne des Unterkiefers oder Oberkiefers eines Benutzers angepasst ist.

14. Zahnputzvorrichtung (100) gemäß Anspruch 13, wobei jeder Basiskörper (32) an den Innenseiten, die zur Befestigung des Einsatzkörpers (34) dienen, eine gitterförmige Netzstruktur aufweist, um die Verbindung zwischen Basiskörper (32) und Einsatzkörper (34) zu verbessern.

15. Zahnputzvorrichtung (100) gemäß Anspruch 13 oder 14, wobei die Einsatzkörper (34) jeweils an ihren den Zähnen des Benutzers zugewandten Flächen eine Vielzahl von Reinigungsstrukturen aufweisen.

16. Anpassungsverfahren für einen Mundeinsatz (30a, 30b) für eine Zahnputzvorrichtung, umfassend:
Bereitstellen einer Zahnputzvorrichtung (100) gemäß einem der Ansprüche 1-15,
Bereitstellen eines Einsatzkörpers (34), der aus einem thermoplastischen Elastomer hergestellt ist (S510),
Erwärmen des Einsatzkörpers (34) auf eine Temperatur, die eine einfache plastische Verformung des Einsatzkörpers (34) zulässt (S520);
Einführen des erwärmten Einsatzkörpers (34) in den Mundraum eines Benutzers (S530);
Andrücken des erwärmten Einsatzkörpers (34) an die Zähne des Ober- oder Unterkiefers des Benutzers (S540);
Entfernen des Einsatzkörpers (34) aus den Mundraum des Benutzers (S550); und
Abkühlen und somit Aushärten des Einsatzkörpers (34) (S560).

17. Anpassungsverfahren gemäß Anspruch 16, weiterhin umfassend:
Zusammensetzen des Einsatzkörpers (34) mit einem Basiskörper (32), der grob an eine Form der Zähne des Unterkiefers oder Oberkiefers des Benutzers angepasst ist, nach dem Schritt des Abkühlens oder zwischen den Schritten des Entfernens und des Abkühlens.

## Claims

1. Teeth cleaning device (100) for the simultaneous cleaning of multiple, preferably all of a user's teeth, comprising:
a mouth insert (30a) for the user's upper jaw and a mouth insert (30b) for the user's lower jaw;
a drive device (10) having a fastener (12); and
a coupling section (20) including two arms (22) and a connecting section (24) for the drive device (10), wherein the mouth inserts (30a, 30b) are respectively connected to an arm (22) of the coupling section (20) and wherein the connecting section (24) for the drive device connected to the drive device (10) via the fastener (12) thereof,
**characterized in that**
the arms (22) of the coupling section (20) that are connected to the mouth inserts (30a, 30b) respectively include at least one spring section (22a, 22b).

2. Teeth cleaning device (100) according to claim 1, wherein the mouth inserts (30a, 30b) are respectively adapted for cleaning the teeth in the user's entire upper jaw or the entire lower jaw.

3. Teeth cleaning device (100) according to any one of the preceding claims, wherein the drive device (10) is adapted to transfer an oscillation from 100 Hz to 500 Hz, preferably 200 Hz to 350 Hz to the mouth inserts (30a, 30b) via the Y coupling section (20).

4. Teeth cleaning device (100) according to any one of the preceding claims, wherein the drive device (10) is adapted to cause the coupling section (20) and the mouth inserts (30a, 30b) to vibrate, preferably to vibrate in a sinusoidal curve, in a plane corresponding to the plane in which the arms (22) of the coupling section (20) are positioned.

5. Teeth cleaning device (100) according to any one of the preceding claims, wherein the coupling section (20) is constructed integrally with the spring sections (22a, 22b).

6. Teeth cleaning device (100) according to any one of claims 1 to 4, wherein the spring sections (22a, 22b) are replaceable by means of plug-in or threaded connectors.

7. Teeth cleaning device (100) according to any one of claims 1 to 5, wherein the spring sections (22a, 22b) are constructed integrally with the mouth inserts (30a, 30b).

8. Teeth cleaning device (100) according to any one of the preceding claims, wherein the spring sections (22a, 22b) are tapered compared with the arm (22) of the coupling section (20) to which they are connected, and arranged as an up and down bent S-structure or a curved structure.

9. Teeth cleaning device (100) according to claim 8, wherein the tapering of the arms (22) of the coupling section (20) is created by flattening of the respective arms (22) of the coupling section (20) and these then form the S-shape (29) by bending the flattened arms upwards and downwards in the plane that extends lengthwise through the arms (22) and the connecting section (24) for the drive device of the coupling section (20).

10. Teeth cleaning device (100) according to any one of claims 1-7, wherein the spring sections (22a, 22b) are formed by a plurality of notches (28) on the outer sides and/or the inner sides of the respective arms (22) of the coupling section (20).

11. Teeth cleaning device (100) according to claim 10, wherein the spring sections (22a, 22b) are formed by recesses (28) on the outer sides of the arms (22) of the coupling section (20) or alternatingly and offset with respect to each other respectively on the outer and inner sides of the coupling section (20), which extend perpendicularly to the longitudinal axis of the respective arm (22) and are cut at least as far as halfway into to the respective arm (22).

12. Teeth cleaning device (100) according to any one of the preceding claims, wherein the connecting section (24) for the drive device of the coupling section (20) is constructed as an additional, third arm, which extends from a connecting point of the two arms (22) that are connected to the mouth inserts (30a, 30b), and wherein the third arm optionally comprises an additional spring section.

13. Teeth cleaning device (100) according to any one of the preceding claims, wherein the mouth inserts (30a, 30b) respectively comprise:
a base element (32) of a biocompatible polyamide which has been adapted roughly to a shape of the teeth of a user's lower jaw or upper jaw; and
an insert element (34) made from a thermoplastic elastomer which is affixed to the inner sides of the base element and is adapted to match a shape of the user's lower jaw or upper jaw dentition.

14. Teeth cleaning device (100) according to claim 13, wherein each base element (32) on its inner sides, which serve for fastening the insert element (34), have a mesh-like network structure to improve the connection between the base element (32) and the insert element (34).

15. Teeth cleaning device (100) according to claim 13 or 14, wherein the insert elements (34) each have a plurality of cleaning structures on the surfaces facing the user's teeth.

16. Adaption method for a mouth insert (30a, 30b) for a teeth cleaning device (100), comprising:
providing a teeth cleaning device (100) according to anyone of claims 1-15,
providing an insert element (34) made from a thermoplastic elastomer (S510),
heating the insert element (34) to a temperature allowing for an easy plastic deformation of the insert element (34) (S520),
introducing the heated insert element (34) into the oral cavity of a user (S530);
pressing the heated insert element (34) to the teeth of the upper or lower jaw of the user (S540);
removing the insert element (34) from the oral cavity of the user (S550); and
cooling and thus curing the insert element (34) (S560).

17. Adaption method according to claim 16, further comprising:
assembling the insert element (34) with a base element (32), which is adapted roughly to a shape of the teeth of a user's lower jaw or upper jaw, after the step of cooling or between the steps of removing an cooling.

## Revendications

1. Dispositif de brossage des dents (100) pour le nettoyage simultané de plusieurs, de préférence de toutes les dents d'un utilisateur, comprenant :
un ensemble d'insertion buccal (30a) pour la mâchoire supérieure de l'utilisateur et un élément d'insertion buccal (30b) pour la mâchoire inférieure de l'utilisateur,
un dispositif d'entraînement (10), qui comporte une fixation (12), et
une section d'accouplement (20), qui comporte deux bras (22) et une section de liaison de dispositif d'entraînement (24), sachant que les éléments d'insertion buccaux (30a, 30b) sont respectivement reliés à un bras (22) de la section d'accouplement (20) et la section de liaison de dispositif d'entraînement (24) est reliée au dispositif d'entraînement (10) par le biais de sa fixation (12),
**caractérisé en ce que**
les bras (22) de la section d'accouplement (20), qui sont reliés aux éléments d'insertion buccaux (30a, 30b), comportant respectivement au moins une section à ressort (22a, 22b).

2. Dispositif de brossage des dents (100) selon la revendication 1, sachant que les éléments d'insertion buccaux (30a, 30b) sont adaptés respectivement pour le nettoyage des dents de toute la mâchoire supérieure ou de toute la mâchoire inférieure de l'utilisateur.

3. Dispositif de brossage des dents (100) selon l'une quelconque des revendications précédentes, sachant que le dispositif d'entraînement (10) est adapté pour transmettre une vibration de 100 Hz à 500 Hz, de préférence 200 Hz à 350 Hz aux éléments d'insertion buccaux (30a, 30b) par le biais de la section d'accouplement en forme d'Y (20).

4. Dispositif de brossage des dents (100) selon l'une quelconque des revendications précédentes, sachant que le dispositif d'entraînement (10) est adapté pour actionner la section d'accouplement (20) et les éléments d'insertion buccaux (30a, 30b) dans un plan pour vibrer, de préférence dans une courbe sinusoïdale, qui correspond au plan dans lequel se situent les bras (22) de la section d'accouplement (20).

5. Dispositif de brossage des dents (100) selon l'une quelconque des revendications précédentes, sachant que la section d'accouplement (20) est constituée en une seule pièce avec les sections à ressort (22a, 22b).

6. Dispositif de brossage des dents (100) selon l'une quelconque des revendications 1-4, sachant que les sections à ressort (22a, 22b) sont interchangeables par le biais de raccords emboîtables ou à vis.

7. Dispositif de brossage des dents (100) selon l'une quelconque des revendications 1-5, sachant que les sections à ressort (22a, 22b) sont constituées en une seule pièce avec les éléments d'insertion buccaux (30a, 30b) .

8. Dispositif de brossage des dents (100) selon l'une quelconque des revendications précédentes, sachant que les sections à ressort (22a, 22b) sont rétrécies en comparaison du bras (22) de la section d'accouplement (20), avec lequel elles sont reliées, et sont incurvées ou sont disposées dépliées et pliées en forme de S.

9. Dispositif de brossage des dents (100) selon la revendication 8, sachant que le rétrécissement des bras (22) de la section d'accouplement (20) est formée par aplatissement des bras respectifs (22) de la section d'accouplement (20) et ceux-ci forment ensuite la forme en S (29) par dépliage et pliage des bras aplatis, dans le plan qui passe longitudinalement par les bras (22) et la section de liaison du dispositif d'entraînement (24) de la section d'accouplement (20).

10. Dispositif de brossage des dents (100) selon l'une quelconque des revendications 1-7, sachant que les sections à ressort (22a, 22b) sont formées respectivement par plusieurs encoches (28) sur les côtés extérieurs et/ou les côtés intérieurs sur les bras (22) de la section d'accouplement (20).

11. Dispositif de brossage des dents (100) selon la revendication 10, sachant que les sections à ressort (22a, 22b) sont formées par des entailles (28) sur les côtés extérieurs des bras (22) de la section d'accouplement (20) ou alternativement et décalées l'une par rapport à l'autre respectivement sur les côtés extérieurs et intérieurs de la section d'accouplement (20), qui passent perpendiculairement par rapport à l'axe longitudinal du bras respectif (22) et sont au moins entaillées jusqu'à la moitié du bras respectif (22) .

12. Dispositif de brossage des dents (100) selon l'une quelconque des revendications précédentes, sachant que la section de liaison du dispositif d'entraînement (24) de la section d'accouplement (20) est constituée comme un troisième bras supplémentaire, qui s'étend depuis un point de liaison des deux bras (22) qui sont reliés aux éléments d'insertion buccaux (30a, 30b) et sachant que le troisième bras comprend en option une section à ressort supplémentaire.

13. Dispositif de brossage des dents (100) selon l'une quelconque des revendications précédentes, sachant que les éléments d'insertion buccaux (30a, 30b) comprennent respectivement :
un corps de base (32) en polyamide biocompatible, qui est grossièrement adapté à une forme des dents de la mâchoire inférieure ou de la mâchoire supérieure d'un utilisateur, et
un corps d'insertion (34) en élastomère thermoplastique, fixé aux côtés intérieurs du corps de base, qui est adapté de façon précise à une forme des dents de la mâchoire inférieure ou de la mâchoire supérieure d'un utilisateur.

14. Dispositif de brossage des dents (100) selon la revendication 13, sachant que chaque corps de base (32) sur les côtés intérieurs, servant à fixer le corps d'insertion (34), comporte une structure réticulaire en treillis pour améliorer la liaison entre les corps de base (32) et les corps d'insertion (34).

15. Dispositif de brossage des dents (100) selon la revendication 13 ou 14, sachant que les corps d'insertion (34) comportent respectivement sur leurs surfaces tournées vers les dents de l'utilisateur, une pluralité de structures de nettoyage.

16. Procédé d'adaptation pour un élément d'insertion buccal (30a, 30b) pour un dispositif de brossage des dents, comprenant :
la préparation d'un dispositif de brossage des dents (100) selon l'une quelconque des revendications précédentes 1-15,
la préparation d'un corps d'insertion (34), qui est fabriqué dans un élastomère thermoplastique (S510),
le réchauffement du corps d'insertion (34) à une température, qui permet une déformation plastique simple du corps d'insertion (34) (S520),
l'introduction du corps d'insertion réchauffé (34) dans l'espace buccal d'un utilisateur (S530),
l'appui du corps d'insertion réchauffé (34) sur les dents de la mâchoire supérieure ou de la mâchoire inférieure de l'utilisateur (S540),
l'enlèvement du corps d'insertion (34) de l'espace buccal de l'utilisateur (S550), et
le refroidissement et de ce fait le durcissement du corps d'insertion (34) (S560).

17. Procédé d'adaptation selon la revendication 16, comprenant en plus :
l'assemblage des corps d'insertion (34) à un corps de base (32), qui est grossièrement adapté à une forme des dents de la mâchoire inférieure ou de la mâchoire supérieure de l'utilisateur, après l'étape de refroidissement ou entre les étapes de l'enlèvement et du refroidissement.
